Europäisches Patentamt

European Patent Office

Office européen des brevets

(19)

(11) **EP 1 457 285 A1**

(12) # EUROPEAN PATENT APPLICATION

(43) Date of publication:
**15.09.2004 Bulletin 2004/38**

(51) Int Cl.⁷: **B23G 1/18**

(21) Application number: **04002281.6**

(22) Date of filing: **03.02.2004**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **12.03.2003 IT pn20030020**

(71) Applicant: **Bordignon, Simone**
**36028 Rossano Veneto (IT)**

(72) Inventor: **Bordignon, Simone**
**36027 Rosà Vicenza (IT)**

(74) Representative: **Giugni, Valter**
**PROPRIA S.r.l.,**
**Via Mazzini 13**
**33170 Pordenone (IT)**

(54) **Eletronically controlled electromechanical tapping apparatus**

(57)  Automatic tapping apparatus comprising an electric motor (1) adapted to rotate in both directions of rotation, a tool spindle (8) driven by said motor (1) and adapted to carry the thread-forming tool (9), and a forward-feeding device adapted to receive a command to produce the translational motion of said tool spindle (8). There are provided electronic control circuits that are adapted to control the rotation of the electric motor (1) during tapping and during the unscrewing/withdrawal phase with two independent and selectively pre-settable speeds of rotation.

Preferably, there is provided a sensor (30) that is adapted to detect the end of the forward travel of the tool spindle (8) and to output at least a respective phase-changeover signal to said electronic control circuits and said forward-feeding device.

FIG.3

EP 1 457 285 A1

## Description

The present invention refers to an electromechanical tapping machine that is specially dedicated to automatically tapping holes that are provided in sheet-metal parts, said tapping machine being driven by at least an electric motor, being provided with special electronic control means, and being adapted to carry out a sequence of tapping operations in pre-formed holes in a fully automatic manner.

Largely known in the art there are tapping machines that are substantially constituted by a ram of a vertical press, to which there is connected a mechanism formed by a multiplicity of gears, and which engages an appropriate rack that is firmly joined to the structure of the press. On the lower portion of such mechanism there is provided a rotating member, in which there is applied a spindle that carries and drives an appropriate tapping tool accordingly.

The operation of such tapping machine is well-known in the art: when the ram of the press moves downwards, the mechanism interacts with said rack, or even with a screw, which causes a set of shafts, gears and other mechanical members to rotate so that the rotating member carrying the spindle is caused to simultaneously move downwards, due to the effect of the downward-movement of press ram, and start rotating owing to the action of said mechanism.

The combination of these two movements enables the tapping operation to be performed correctly.

At the end of the tapping operation, the press, or the ram, is caused to rise, i.e. to move upwards, and this in turn causes both the spindle itself to rise as a matter of course and the direction of rotation thereof to change instantaneously, so as to enable it to be withdrawn from the tapped hole, on account of the rigidity of the mechanical couplings involved.

However, the tapping operation, even if carried out in an automated manner, remains a rigid kind of machining process; as a matter of fact, the kind of rotation is tightly connected to a specific working mode of the spindle (i.e. moving away and/or closer) and such rigidity does not allow for any more sophisticated or elaborate kind of operation to be performed or the movements to be more selectively controlled.

In addition, even the speed of rotation of the tool during the return or withdrawal phase is limited by the low speed and rate of the ram, which controls both the axial movement and the rotary movement of the tool.

In view of improving both the performance capabilities and the overall functionality of these tapping machines, particularly improved kinds of tapping devices have been developed, which are adapted to reduce to a significant extent the drawbacks connected to their operation of a necessarily alternating, i.e. reciprocating type.

One of these improvements has been described in the Italian Patent Application No. PN2001U000017 filed on 21st May 2001 with the title "IMPROVED ELECTROMECHANICAL TAPPING APPARATUS" in the name of this same Applicant. Actually, this improvement is effective in solving some problems connected to the pre-established orientation of tapping devices in general, as well as in clearing the operation of the spindle from a pre-determined position or orientation of an external member, such as the ram or the press.

However, the solution disclosed in the above-cited document, although simple and effective, does not eliminate a drawback that represents the major limitation to the use of said tapping devices: in fact, even with the solution described in the above-cited Italian patent, the speed of rotation and forward-movement of the tapping tool during the tapping phase of the operation must necessarily be limited in view of avoiding the excessive temperature that would otherwise be developed and impair the result of the whole machining operation.

As a result, consistently with the solution disclosed in the above-cited document, also the speed of rotation of the tool during the return or withdrawal phase thereof is unavoidably limited by the fact that a constant-speed motor is used.

The basic idea behind the present invention, however, relies on the consideration that, during said return or withdrawal phase, almost no work does actually take place, i.e. is produced practically between the tapping tool and the tapped hole, so that the afore noted constraint of a likely excessive heating up does not exist any longer.

As a result, the speed of rotation during withdrawal could be increased autonomously to much higher levels than the typical ones reached by the speed of rotation during tapping, thereby significantly reducing the cycle time of the whole operation and, as a result, increasing to a quite sensible extent the overall economic efficiency of the process. However, this is practically impossible to reach either with prior-art or conventional technical solutions, owing basically to the fact that the mechanical relation between the ram or press and the rotational drive of the tool is a fixed one that cannot therefore be modified during the sole withdrawal phase, or the solution described in the afore cited patent document, in which the electric motor is used in a manner that, although quite efficient thanks to its being driven to revolve in a single direction of rotation, is not the optimum one during the return or withdrawal phase, since, on account of the fact that its revolving speed is constant, the same speed turns out to be far lower than the highest revolving speed that could possibly be reached during withdrawal in the light of the afore indicated reasons.

It would therefore be advantageous, and it is actually a main object of the present invention, to provide a solution for the embodiment of a tapping machine, as suitably associated to at least an electric motor, in which the revolving speed of the tapping tool during the withdrawal phase is capable of being controlled in a manner that is independent from the revolving speed during tapping and, in particular, in such a manner as to make it possible for said revolving speed during withdrawal is much higher than the revolving speed during tapping, and which is further capable of being manufactured using simple and readily available materials and techniques.

According to the present invention, these aims and advantages, along with further ones that will emerge from the following description, are reached in an electronically controlled tapping apparatus that is made and operates as recited and defined in the appended claims.

Features and advantages of the present invention will anyway be more readily understood from the description of a preferred, although not sole embodiment that is given below and illustrated by way of non-limiting example with reference to the accompanying drawings, in which:

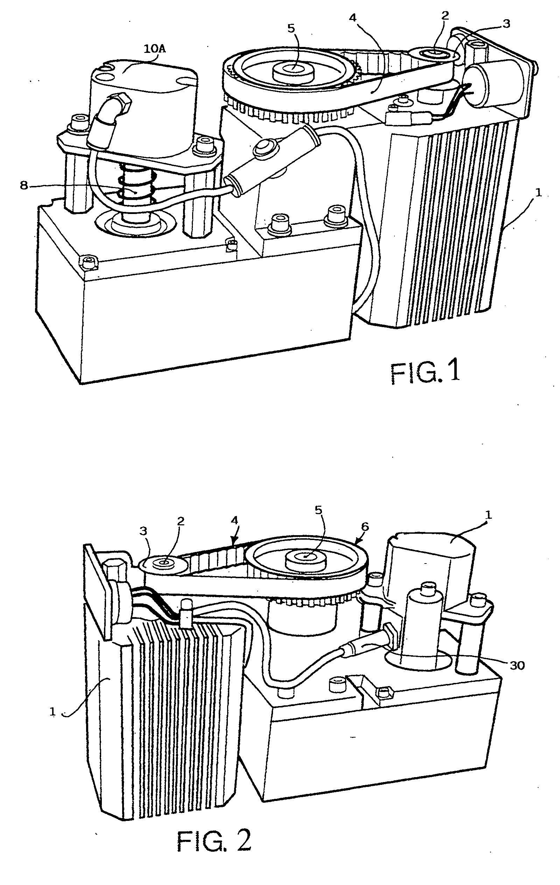

- Figures 1 and 2 are two almost opposite diagonal perspective views of a tapping apparatus according to the present invention;

- Figure 3 is a schematical view illustrating an exemplary arrangement of the component parts of a tapping apparatus according to the present invention;

- Figure 4 is a symbolical view of a wiring and connection diagram of the electric component parts of a tapping apparatus according to the present invention;

- Figure 5 is a diagrammatical view illustrating the operation of the two steps or phases of a tapping operation in accordance with the present invention;

- Figure 6 is a perspective bottom view of a tapping apparatus generally of the kind illustrated in the preceding Figures, as duly enclosed in an appropriate support and containment housing thereof.

With reference to the above-noted Figures, a tapping apparatus according to a preferred embodiment of the present invention can be noticed to comprise following devices/means:

- an electric motor 1, provided with an external rotating shaft 2,
- a pulley 3 shrink-fitted on to said shaft 2,
- a first belt 4 engaging said pulley,
- a plurality of motion-transmission mechanisms for rotatably driving said pulley 3, as exemplified by a second shaft 5 in this example,
- a second pulley 6 and
- a second belt 7,
- a spindle 8 driven by said second belt 7, wherein the tapping tool 9 is applied to this spindle 8,

- a single-acting piston device 10, provided with an outer inlet aperture 11 for letting actuating fluid, preferably compressed air, into the inner chamber of the same device 10, wherein the latter is adapted to bring about and control the forward and backward movements and the position of the spindle 8.

In addition, said single-acting piston device 10 is provided with a preferably preloaded or biasing spring 10A, which is arranged between the lower surface of the piston and a support 10B that is firmly joined to the structure of said device 10, but is adapted to enable said spindle to slide therewithin. In this way, when the device is not working, i.e. is in a resting condition, or in the withdrawal/return condition (i.e. when the pressure inside the chamber 10C of the cylinder is reduced), the piston and the spindle connected thereto are pushed upwards by said bias spring, so that the tapping tool 9 is withdrawn from the hole by the simple and sole action of said spring.

The afore mentioned second belt 7 is in turn arranged to engage a third pulley provided internally with a through-bore 11A, in which said spindle 6 is inserted so as to be able to slide axially therewithin, said bore being however profiled to match the corresponding outer contour of the spindle, so as to be able to transmit a rotary motion in both directions of rotation thereto.

Said electric motor 1, the pulleys, the spring-biased device 10, the spindle and the belts are kept duly spaced apart for correct tensioning, and are supported by an appropriate structure or bearing frame (not shown). In this way, and to the purposes of this description, the tapping apparatus is substantially completed, with all parts thereof duly assembled and joined together.

Fundamental to the purposes of the present invention is the type of electric motor 1 that is used; in fact, as this will become more clear and apparent later on in this description, this motor should be a motor of the so-called brushless type, provided with a rotor featuring a very low inertia, as this is currently and readily available on the market.

This motor is power-supplied via a control and synchronization circuit 20 that, symbolically, comprises a voltage/current rectifier device 21, an oscillating device 22 for generating a variable-frequency current, preferably of the square-wave type, a device 23 for amplifying said variable-frequency current; furthermore, there are provided external means 24 for selecting and programming the frequency being generated, as well as external means 25 for regulating and controlling the current amplification of said device 23.

The above-described example has been given to the sole purpose of providing a typical representation of a means for the generation of a driving current for the electric motor 1, which is capable of being both frequency-controlled and amplitude-controlled, and which is of course also capable of being used for controlling the direction of rotation of the motor. Other circuit arrangements and/or functional forms can of course be implemented in this connection in order to attain the same result, i.e. the generation of a frequency-controllable and amplitude-controllable oscillating current, in particular through the use of such inverter-type circuits as they have being developed more recently, which in fact are capable of generating the motor drive and control current without having to necessarily pass through a direct-current generation stage, since they make directly use of an alternating current to produce an oscillating current at different and controlled frequencies.

The operation of the tapping apparatus described above is as follows: in an initial phase of operation, the electric motor 1, via said means 2 through to 7, drives the spindle 8 to rotate in a pre-established direction of rotation and, at the same time, under the action of the device 10, the tapping tool 9 is suitably moved closer to and inserted in the hole 17 for it to be able to tap the hole 17 in the plate 18.

As already hinted at previously, said plate 18 is a steel plate of a traditional kind, usually obtained as a hot-rolled mass-product, in which a large number of tapped holes need to be provided in an automatic manner, so that an optimisation of all related working and machining operations from an industrial point of view is of the utmost importance.

In this first phase of operation, said electric motor 1 is energized selectively, via control means of a kind generally known as such in the art (not shown), so that an adequate torque is applied on to the spindle 8, via the various motion-transmission means, to enable the tapping operation to be performed at an allowable speed, i.e. number of revolutions per minute, which is however limited to a value excluding the risk of overheating.

In the next phase of operation, i.e. when the actual tapping has been completed, by virtue of appropriate commands of a pneumatic or any other suitable nature generated by appropriate control and synchronization means (not shown), the driving direction of both the device 10 and the motor 1 is inverted, so that the spindle, which is no longer pressed into the hole by the action of the device 10, is now subjected, by the action of the spring 10A, to a backward-pushing, i.e. withdrawal force tending to cause it to move back out of the hole. In turn, the electronic circuit 20 generates and sends to the motor 1 a supply voltage having such a polarity/phase and such an amplitude as to cause said motor to impart a torque to the spindle that is now very low, although appropriate to cause the tapping tool to be unscrewed out of the hole, while however driving the same spindle at a rotating speed that is much higher than the rotating speed used for tapping. This can now be achieved owing to the fact that, since there is no longer any resisting torque (the tapping tool needs in fact to just be unscrewed out of already formed threads), it only takes to exert a very low torque in order to obtain a high unscrewing speed. Furthermore, said electric motor is in an advantageous manner of the type having a rotor with a very low inertia, such as it is currently available on the market and, as such, is particularly well adapted to be able to invert the direction of rotation thereof almost instantly, i.e. in a very short time, without any excessive energy usage and any prohibitive space requirements.

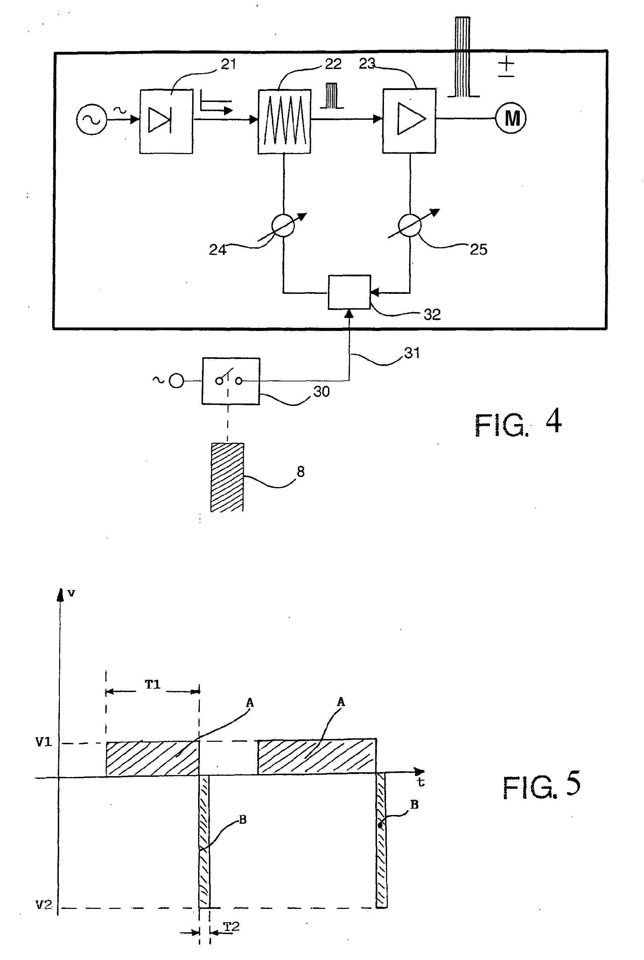

The above-described mode of operation can also be represented in a diagrammatical manner: with reference to Figure 5, a Cartesian coordinate system is in fact shown, in which the time axis t is plotted along the axis of abscissas, while the speed of rotation V of the spindle is plotted along the axis of ordinates.

During the tapping phase, the spindle works at a rotational speed V1 during a time T1; given the pitch of the threads, during this time a threading is formed, the depth of which will be proportional to the product V1·T1 and, as a result, it will be proportional to the hatched area A in the Figure.

During next withdrawal phase, which immediately follows the above-indicated tapping phase, the spindle has to cover, however in the inverted direction, the same travelling path as represented by the hatched area B in the Figure. However, due to its rotating at a much higher speed V2, and considering that the return travelling path is logically the same and, therefore, the area representing it must be equal, this condition is logically met if the time T2 taken for the withdrawal phase to be completed is given by:

$$T2 = V1·T1/V2.$$

It can therefore be readily appreciated that, owing to T1 being constant and, anyway, not alterable, the withdrawal time T2 is inversely proportional to the withdrawal speed V2. And, considering that the total cycle time Tc is of course Tc = T1 + T2, the resulting advantage that can be easily reached in terms of time and, therefore, overall efficiency and, ultimately, productivity, can now be fully appreciated.

Nor should anyone be misled into deception by the exiguousness of the time that is saved in the above-described manner: in fact, if T1 = T2 = T and, therefore, Tc = 2T in prior-art solutions, the possibility is given according to the present invention for an unscrewing, i.e. withdrawal speed V2 to be easily produced, which is equal to five times the tapping speed V1, thereby obtaining a cycle time Tc1 = T1 + T2 = T1 V1·T1/V2 = T·(1 + V1/V2) = T·(1 + 1/5) = 1.2 · T, which is a time that is by as much as 60 percent lower than the typical cycle time according to prior art altogether.

In the still subsequent phases of the operation, the tapping tool 8 is fully withdrawn from the hole and the plate 18, with its sequence of holes 17, 19, 20, etc. to be tapped, is caused to move forwards in the direction indicated by the arrow H by such a length of travel as required to bring the subsequent hole 19 to be tapped exactly under the tapping tool 9, which is still in its raised position.

This phase, as well as the subsequent ones, in which the plate is so moved forwards and the tapping cycle is repeated, are generally described in the aforementioned patent publication, so that they shall not be described or explained here any further.

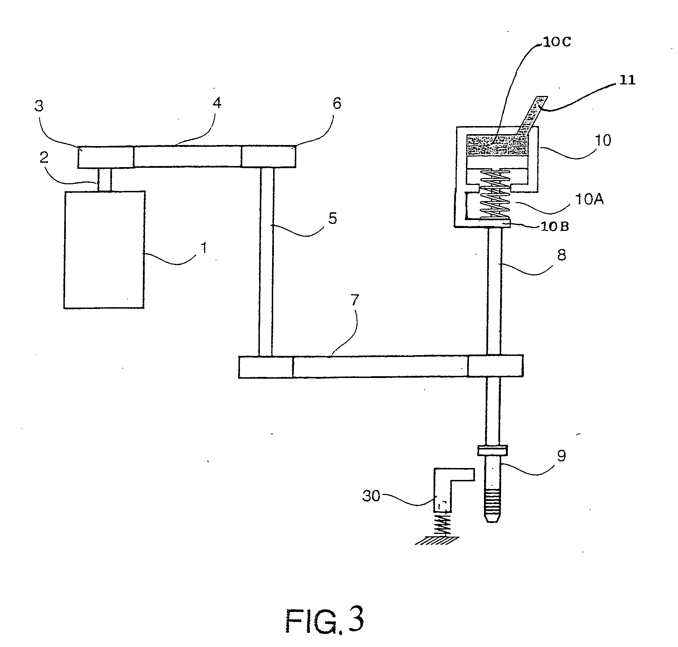

In an advantageous manner, and with reference to the illustrations in Figures 3 and 4, in order to determine the cadence or rate at which the various operating phases of the machine are performed and, more generally, to determine the operating sequence of the entire apparatus, use is made of an appropriate contact or proximity sensor 30, which is adapted to detect the moment at which the spindle 8 has moved closer to the holes 17, 19, 20, etc. by such a distance as to enable the tapping tool 9 carried by it to penetrate the respective hole and move down to a predefined depth, i.e. the precise instant at which the tapping phase must be terminated and the subsequent unscrewing/withdrawal phase must therefore be started.

As an alternative solution to such sensor 30, use may effectively be made of a device that is adapted to count the number of revolutions performed by the spindle (such as a revolution counter or a pulse counter), which delivers a number of revolutions performed by the spindle that, when processed based on the pitch of the related threads, produces an information that is indicative of the length of travel covered by the spindle or the depth reached by the spindle itself.

Such sensing/detecting device 30, whether it is a contact sensor, a pulse/revolution counter or an equivalent device, is therefore connected via an appropriate link 31 to said circuit 20, so as shown schematically in Figure 4, for the synchronization of the operation thereof.

Said circuit 20, therefore, must be at least provided with means 32 that are adapted to receive the synchronizing signal from said sensor 30, on the basis of which it must then be capable of acting on the oscillating device 22 and the amplification device 23 to generate a both variable-frequency and variable-amplitude supply current. These two parameters must be capable of being selected from the outside on the basis of the various existing constraints, while the sole cyclic sequence of the succession thereof must actually be capable of being performed automatically on the basis of the signal coming from said sensor 30; furthermore, said same signal from the sensor 30 must of course be such as to produce a current adapted to reverse the direction of rotation of the motor, so as to bring about the unscrewing motion of the tapping tool.

In short, the signal delivered by the sensor 30 (which is indicative of the end of the tapping phase) must bring about following changes in the operation of the tapping apparatus in general, i.e.:

a) a reversal in the direction of rotation,

b) a sensible increase in the speed of rotation, without any increase in the torque produced by the motor,

c) the interruption in the forward motion of the spindle and the automatic return, i.e. backward motion of the same spindle under the action of the spring 10A of the device 10.

Those skilled in the art should by now be fully capable of appreciating the significant extent of operational flexibility brought about by the present invention: in fact, the torque that is required to perform the actual tapping operation may be obtained by appropriately sizing, in a most easy manner, the velocity or transmission ratio of the mechanisms provided between the electric motor and the spindle, although said electric motor is such as to inherently produce a rather modest torque.

As far as the unscrewing/withdrawal phase of the operation is on the contrary concerned, this is made possible and facilitated by the fact that the oscillating frequency of the oscillator 22 is modifiable and, in particular, can most easily be increased within the envisaged range of utilization, as all those skilled in the art are well aware of.

Those skilled in the art are therefore able to most readily appreciate that some of the problems generally found in the state of the art can actually be overcome through a synergic utilization of some elements that, although largely known as such in the art, have never been used in a combined manner in apparatuses for tapping holes provided in metal plates and sheets; in fact, what is generally considered as the critical performance parameter during tapping, i.e. the torque, is obtained with the help of simple mechanical means, while on the other hand using a motor with a relatively low power rating and, therefore, rather low in costs, whereas the critical performance parameter during the unscrewing/withdrawal phase, i.e. the speed of rotation, is ensured by sensibly increasing, in an easy and inexpensive manner, the power-supply frequency.

In addition, the possibility for the direction of rotation of the motor to be reversed most promptly and without any substantial energy loss is ensured through the use of brushless-type motors with very low rotor inertia.

The above-described apparatus stands particularly out for its very compact size, the possibility for it to work correctly under any inclination, as well as for it making use of component parts and devices that are not only readily available in the art, but also safe, reliable, efficient, low-cost and most convenient to install, assemble and use. In particular, as compared with prior-art solutions, the apparatus according to the present invention turns out to be much simpler owing to its requiring a lower number of functional parts; it proves finally considerably more flexible in use, since all it takes to switch over from an application to another one is to correspondingly act on the frequency and amplitude settings of the power-supply device of the motor 1 (apart of course from the unavoidable replacement of the tapping tool, if required), instead of having to replace the whole mechanical power-transmission unit used to drive the tapping tool into rotating and moving forwards/backwards, as this is usually required in prior-art apparatuses.

The embodiment that has been so illustrated in the above description can of course be subject to and accommodate a number of different variants, modifications and improvements without departing from the scope of the present invention. In particular, the single-acting piston device 10 and the bias spring 10A may be effectively replaced by a double-acting piston device, in which the piston stroke is controllable in both directions by acting accordingly on the pressure and the flow-rate of the fluid, usually air, that alternately flows into and fills the two chambers situated on the opposite sides of the common piston; such double-acting piston devices are well known in the art, so that no need arises here to describe them any further, actually.

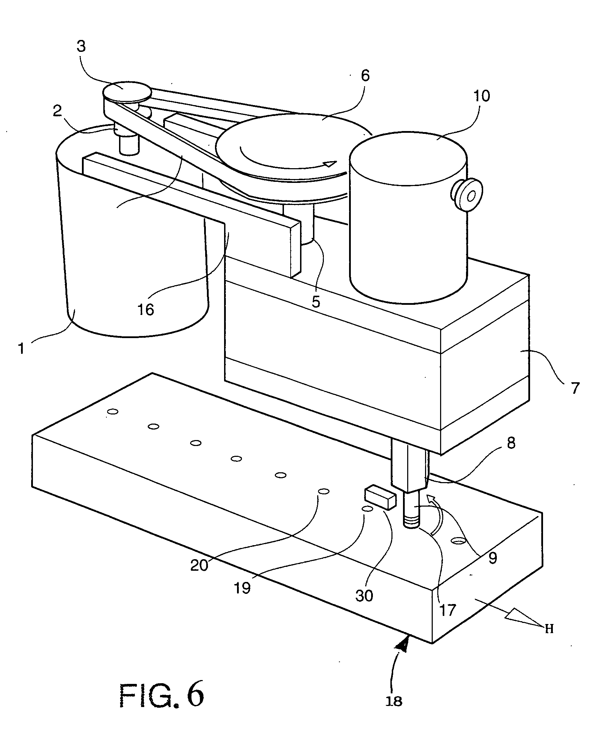

It will of course be fully appreciated that the Figures, to which reference has been made in the preceding description, have been drawn as such to the sole purpose of most clearly illustrating the arrangement and the nature of the various component parts and devices in the apparatus, as well as the mutual connection thereof. However, in the actual industrial practice, all such component parts and devices will most advantageously be appropriately accommodated within a sealed housing, as this is shown symbolically in Figure 6, thereby ensuring an adequate protection of the mechanisms of the tapping apparatus against moving foreign matters, as well as shocks and bumps against other stationary machine parts, while said same housing may advantageously be used as a bearing structure or framework for other component parts of the tapping apparatus itself.

**Claims**

1. Automatic tapping apparatus for tapping holes in metal plates and sheets, **characterized in that** it comprises an electric motor (1) adapted to rotate in both directions of rotation in a selectively pre-definable manner, a tool spindle (8) carrying the tapping tool (9), the motion of which is driven, even indirectly via appropriate means (2, 3, 5, 7), by said electric motor, and a preferably pneumatic forward-feeding device adapted to receive a command to produce the translational motion of said tool spindle and to impart a motion causing said tool-holding spindle (8) to move into and away from the respective hole (17) to be tapped.

2. Automatic tapping apparatus according to claim 1, **characterized in that** there are provided electronic control circuits (20) that are adapted to control the rotation of said electric motor (1) during tapping and during the unscrewing/withdrawal phase with two independent, selectively pre-settable speeds of rotation, respectively.

3. Automatic tapping apparatus according to claim 2, **characterized in that** there is provided a sensor means (30) that is adapted to detect the moment at which said tool-holding spindle (8) reaches down to a pre-determined position during the tapping phase of the operation, and to output at least a respective control signal to said electronic control circuits (20) and said forward-feeding device (10).

4. Automatic tapping apparatus according to claim 2, **characterized in that** there are provided counter means that are adapted to count the revolutions of the tool-holding spindle in a definite unit of time, and to deliver such information to said electronic control circuits (20), the latter being able to output a signal indicative of the position or the length of travel of said tool-holding spindle based on and in correlation with said information from said counter means.

5. Automatic tapping apparatus according to claim 3 or 4, **characterized in that** said electronic control circuits (20), upon receiving said signal from said sensor (30), generate appropriate control and drive signals to synchronically cause the direction of rotation of said electric motor to be reversed and the rotational speed to be increased to a selectively pre-settable value, along with a stop signal to stop the operation of said forward-feeding device (10).

6. Automatic tapping apparatus according to any of the preceding claims or combination thereof, **characterized in that** said electric motor (1) is a brushless-type motor with very low rotor inertia.

7. Automatic tapping apparatus according to any of the preceding claims or combination thereof, **characterized in that** said forward-feeding device (10) comprises a double-acting pneumatic cylinder.

8. Automatic tapping apparatus according to any of the preceding claims or combination thereof, **characterized in that** it is contained, with at least a partial exclusion of the tool-holding spindle (8), in a single housing preventing the component parts and devices of said tapping apparatus from being acceded to from the outside.

FIG.1

FIG. 2

FIG.3

FIG. 4

FIG. 5

FIG. 6

**European Patent Office**

**EUROPEAN SEARCH REPORT**

Application Number

EP 04 00 2281

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 4 808 047 A (CALEVICH THOMAS J ET AL) 28 February 1989 (1989-02-28) * column 3, line 34 - line 61 * * column 4, line 47 - line 60 * | 1,2 | B23G1/18 |
| Y | | 5,7 | |
| X | US 5 857 814 A (JANG KWAN SOON) 12 January 1999 (1999-01-12) * column 2, line 56 - line 58 * * column 3, line 5 - line 15 * * column 4, line 5 - line 10 * * column 5, line 45 - line 58 * * column 10, line 42 - line 53 * * figure 1 * | 1,3,4,6,8 | |
| Y | | 5 | |
| Y | GB 868 803 A (HANREZ SA J ATEL) 25 May 1961 (1961-05-25) * sentence 72 - sentence 90 * | 7 | |
| | | | TECHNICAL FIELDS SEARCHED (Int.Cl.7) B23G |

The present search report has been drawn up for all claims

| Place of search | Date of completion of the search | Examiner |
|---|---|---|
| The Hague | 28 June 2004 | Fiorani, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 04 00 2281

This annex lists the patent family members relating to the patent documents cited in the above-mentioned European search report.
The members are as contained in the European Patent Office EDP file on
The European Patent Office is in no way liable for these particulars which are merely given for the purpose of information.

28-06-2004

| Patent document cited in search report | | Publication date | Patent family member(s) | | Publication date |
|---|---|---|---|---|---|
| US 4808047 | A | 28-02-1989 | NONE | | |
| US 5857814 | A | 12-01-1999 | DE | 19644694 A1 | 07-05-1997 |
| | | | JP | 9168909 A | 30-06-1997 |
| GB 868803 | A | 25-05-1961 | NONE | | |

EPO FORM P0459

For more details about this annex : see Official Journal of the European Patent Office, No. 12/82